# EUROPÄISCHE PATENTSCHRIFT

(11) **EP 3 101 749 B1**
(45) Veröffentlichungstag und Bekanntmachung des Hinweises auf die Patenterteilung: **20.12.2017**
(21) Anmeldenummer: 16172877.9
(22) Anmeldetag: 03.06.2016
(51) Int. Cl.: H02J 3/14, H02J 3/38, H02J 3/00

(54) **VERFAHREN ZUR STEUERUNG EINES LOKALEN STROMVERBRAUCHERS**
METHOD FOR CONTROLLING A LOCAL POWER CONSUMER
PROCÉDÉ DE COMMANDE D'UN CONSOMMATEUR DE COURANT LOCAL

(30) Priorität: 05.06.2015 CH 8042015
(43) Veröffentlichungstag der Anmeldung: 07.12.2016
(73) Patentinhaber: BKW Energie AG, 3013 Bern (CH)
(72) Erfinder: BURKHARD, Simon, 6205 Eich (CH); MAILLART, Vidushi Christina, 3007 Bern (CH); PANNECK-CONRADI, Thorsten, 3006 Bern (CH); MEGERT, Franziska, 3700 Spiez (CH)
(74) Vertreter: Rüfenacht, Philipp Michael

(56) Entgegenhaltungen:
- US-A1- 2003 047 209
- US-A1- 2011 231 028
- US-A1- 2012 095 612
- US-A1- 2013 085 616
- US-A1- 2013 274 935
- US-A1- 2013 334 880

## Beschreibung

### Technisches Gebiet

Die Erfindung betrifft ein Verfahren zur Steuerung eines lokalen Stromverbrauchers, wobei der lokale Stromverbraucher sowohl Strom aus einem Stromnetz als auch von einer lokalen Photovoltaik-Produktionsanlage beziehen kann. Das Verfahren umfasst folgende Schritte: Erstellen einer Produktionsüberschussprognose in Bezug auf die lokale Photovoltaik-Produktionsanlage für ein zukünftiges Zeitintervall, basierend auf Wetter-Prognosedaten für das Zeitintervall; und Definieren von vorgeschlagenen Schaltzeiten für den lokalen Stromverbraucher basierend auf der Produktionsüberschussprognose. Die Erfindung betrifft weiter eine Anlage zur Durchführung eines solchen Verfahrens.

### Stand der Technik

Elektrische Energie wird vermehrt lokal, d. h. nahe bei den Stromverbrauchern, erzeugt, insbesondere durch kleinere Produktionsanlagen. So werden vermehrt kleinere Photovoltaik-Produktionsanlagen (PV-Anlagen) eingesetzt, die beispielsweise auf Dächern von Wohn- oder Gewerbebauten angebrachte Photovoltaik-Module umfassen. Diese Produktionsanlagen vermögen den Strombedarf der entsprechenden Bauten in der Regel nicht oder nicht ganzzeitig zu decken, insbesondere weil der Verlauf der Stromproduktion der Anlagen nicht synchron mit dem Strombedarf der lokalen Stromverbraucher ist. Letzteres insbesondere deshalb, weil die Stromproduktion stark von äusseren Umständen wie der Tages- und Jahreszeit sowie der Witterung abhängig ist. Sowohl die Produktionsanlagen als auch die lokalen Stromverbraucher sind deshalb an ein Stromnetz, insbesondere das öffentliche Stromnetz, gekoppelt und beziehen bei Bedarf Strom aus diesem Stromnetz bzw. speisen überschüssig erzeugte Energie in das Stromnetz ein.

Es ist nun von Vorteil, wenn möglichst viel der durch die lokale Photovoltaik-Produktionsanlage erzeugten Energie lokal, d. h. durch die lokalen Stromverbraucher, genutzt werden kann. Ein lokaler Stromverbraucher ist dabei einer, welcher örtlich nahe bei der lokalen Photovoltaik-Produktionsanlage angeordnet ist, insbesondere einer, welcher sich direkt, d. h. ohne Nutzung des Stromnetzes, von der PV-Anlage versorgen lässt. Zum einen lässt sich dadurch die Last im (öffentlichen) Stromnetz minimieren, zum anderen kann der lokale Energiebezug - je nach Tarifstruktur des Stromlieferanten - finanzielle Vorteile für den Betreiber der lokalen Photovoltaik-Produktionsanlage bzw. für den Nutzer der lokalen Stromverbraucher haben (wobei es sich bei diesem Betreiber und diesem Nutzer oftmals um dieselbe Person, dieselbe Personengruppe oder dasselbe Unternehmen handelt).

Um nun die lokale Nutzung der lokal erzeugten Energie zu maximieren (bzw. den Strombezug aus dem Netz zu minimieren), bestehen im Wesentlichen zwei Möglichkeiten: Die lokal erzeugte, aber in gewissen Zeitintervallen nicht benötigte elektrische Energie wird für einen späteren Bezug gespeichert, z. B. in einer Batterie, oder die lokalen Stromverbraucher werden so gesteuert, dass die Last bestmöglich an die Stromproduktion angepasst ist. Der erste Ansatz bietet eine hohe Flexibilität, benötigt aber zusätzliche, kostspielige Infrastruktur. Der zweite Ansatz erfordert kaum zusätzliche Einrichtungen, er lässt sich aber - ohne erhebliche Komforteinbussen für den Benutzer - nicht auf alle lokalen Stromverbraucher anwenden. Lokale Stromverbraucher, welche sich für eine Steuerung in Abhängigkeit der lokalen Produktion eignen, sind insbesondere solche, die eine gewisse Speicherwirkung haben, z. B. Warmwasser-Boiler (elektrische Warmwasseraufbereitung mit Speicherung) oder elektrische Speicherheizungen. Ebenfalls anwendbar ist die Steuerung auf Geräte wie Waschmaschinen oder Geschirrspüler, deren Einsatzzeit sich in gewissen Grenzen wählen lässt.

Damit die Nutzungszeiten solcher Geräte festgelegt werden können, wird eine Prognose für die lokale Stromproduktion benötigt. Bevorzugt steht auch eine Prognose für den lokalen Stromverbrauch zur Verfügung.

So beschreibt die US 2014/163756 A1 (Chevron) ein Verfahren, mittels welchem die Produktion einer Off-Grid-Stromquelle sowie die erwartete Last während einer vorgegebenen Zeitspanne berechnet werden können. Bei der Off-Grid-Stromquelle kann es sich beispielsweise um eine Photovoltaik-Anlage handeln, bei der Last um einen Haushalt bzw. Einrichtungen in einem Haushalt. Sowohl für die Produktions- als auch für die Lastprognose können eine Wettervorhersage sowie historische Daten einbezogen werden. Basierend auf den Prognosen kann eine aus dem Netz bezogene Energiemenge minimiert werden.

Die DE 10 2012 214 811 A1 (Omron) betrifft ebenfalls ein Verfahren zur Prognose einer Stromerzeugungsmenge bei einer photovoltaischen Stromerzeugung. Dazu werden u. a. Messwerte für eine Stromerzeugungsmenge der photovoltaischen Stromerzeugung, Sonnenscheinstunden und der Sonnenstand berücksichtigt. Auch Daten einer Wettervorhersage können verarbeitet werden. Die Stromerzeugungsmenge wird aus den Eingabedaten mit Hilfe eines vorbestimmten Lernmodells, z. B. eines Regressionsmodells eines neuronalen Netzwerks oder einer Support Vector Machine (SVM), bestimmt. Für unterschiedliche Monate oder Jahreszeiten können unterschiedliche Berechnungsmodelle verwendet werden.

Bei dem Verfahren gemäss der DE 10 2011 103 600 A1 (SEW Eurodrive) wird eine von einem photovoltaischen Energieerzeuger versorgbare, benachbart angeordnete Einrichtung in Abhängigkeit von einem prognostizierten zeitlichen Verlauf der Leistung des Energieerzeugers gesteuert. Dabei wird ein optimaler Startzeitpunkt für das Einschalten der Einrichtung in Abhängigkeit u. a. von Wetterdaten gewählt, insbesondere indem ein Faltungsintegral, namentlich das Integral über das Produkt aus Soll-Verlauf der Einrichtung und prognostiziertem Verlauf, berechnet wird. Ziel ist es, dass die von der Einrichtung benötigte Energie möglichst vollständig durch den PV-Energieerzeuger bereitgestellt wird. Bei der Einrichtung kann es sich um einen industriellen Antrieb, aber auch um eine Haushaltsmaschine, z. B. einen Geschirrspüler, eine Waschmaschine oder einen Wäschetrockner, handeln.

Die WO 06/132760 A2 (Equinox Energy Solutions) beschreibt ein Verfahren, bei welchem die Energieerzeugung (z. B. von PV-Anlagen) sowie der Verbrauch (z. B. durch Boiler oder andere flexibel schaltbare Geräte) gesteuert werden; dazu können u. a. Wettervorhersagen berücksichtigt werden. Die erwartete Last wird basierend auf historischen Daten und ggf. unter Berücksichtigung von Umweltdaten (Temperatur, Sonnenschein) abgeschätzt. Dasselbe gilt im Wesentlichen für die erwartete Produktion.

Die US 2012/095612 A1 (C. Rivers et al.) betrifft die Steuerung eines Stromversorgungssystems mit mehreren Komponenten und einer übergreifenden Steuerung, die Betriebszustände prüft und anhand der Erfüllung von Kriterien Komponenten koppeln oder trennen kann. Die Komponenten umfassen insbesondere Photovoltaik-Produktionsanlagen. Diese können selektiv mit einer Batterie, einer Last oder dem Stromnetz gekoppelt werden. Die Steuerung empfängt u. a. Tarifdaten vom Stromversorger sowie Vorhersagen für das Energieangebot und die Nachfrage. Die Steuerung kann auf solchen Vorhersagedaten basieren sowie auf Vorhersagen für Differenzen zwischen Nachfrage und Angebot, als Kriterium können (vorhergesagte) Kosten der zur Verfügung stehenden Energie herangezogen werden. Ebenfalls können Wetterbedingungen (z. B. sonniges oder wolkiges Wetter) als Kriterien herangezogen werden.

Mit Hilfe der erwähnten Verfahren lässt sich die Last im Stromnetz grundsätzlich reduzieren. Es besteht allerdings aufgrund der mit der Wetterprognose verbundenen Unsicherheiten jeweils das Risiko, dass zumindest einige der Stromnutzer aufgrund der ermittelten Nutzungszeiten ihrer Stromverbraucher mehr für den aus dem Stromnetz bezogenen Strom bezahlen müssen, weil beispielsweise die Sonneneinstrahlung aufgrund von Einflüssen der Witterung nicht der Prognose entspricht. Dies senkt die Akzeptanz entsprechender dynamischer Steuerungsmodelle.

### Darstellung der Erfindung

Aufgabe der Erfindung ist es, ein dem eingangs genannten technischen Gebiet zugehörendes Verfahren zur Steuerung eines lokalen Stromverbrauchers zu schaffen, mit welchem das Risiko einer negativen Kostenfolge minimiert wird.

Die Lösung der Aufgabe ist durch die Merkmale des Anspruchs 1 definiert. Gemäss der Erfindung umfasst das Verfahren folgende Schritte:
- Bestimmung einer erwarteten Kostenersparnis für einen Strombezug des lokalen Stromverbrauchers, basierend auf
   - den Wetter-Prognosedaten für das Zeitintervall,
   - den vorgeschlagenen Schaltzeiten,
   - historischen Wetterdaten und/oder historischen Wetter-Prognosedaten,
   - historischen Produktionsdaten und
   - Tarifdaten eines Stromlieferanten ; und
- Steuerung eines Strombezugs des lokalen Stromverbrauchers anhand der vorgeschlagenen Schaltzeiten, falls die erwartete Kostenersparnis ein Validierungskriterium erfüllt.

Zunächst wird somit ein Vorschlag für Schaltzeiten für den lokalen Stromverbraucher in Abhängigkeit der Produktionsüberschussprognose erstellt. Die Schaltzeiten werden so gewählt, dass ein lokaler Strombezug maximiert, eine Nutzung des Stromnetzes somit minimiert, werden kann. Bei der Erstellung der Produktionsüberschussprognose werden Wetter-Prognosedaten berücksichtigt, welche sich auf das fragliche Zeitintervall beziehen und für den Standort der PV-Produktionsanlage (und den Stromverbraucher) relevant sind. Weiter kann in die Produktionsüberschussprognose namentlich eine Prognose für den lokalen Energiebezug einfliessen, insbesondere für den lokalen Energiebezug der nicht im Rahmen des Verfahrens steuerbaren Stromverbraucher.

Der Vorschlag für die Schaltzeiten muss dann erfindungsgemäss validiert werden, bevor er zur Steuerung des lokalen Stromverbrauchers herangezogen wird. Dies dient dazu, unsichere oder zu wechselhafte Wetterlagen zu erkennen und in solchen Fällen Schaltzeiten tagsüber zu verhindern, um die Wahrscheinlichkeit zu reduzieren, dass die freigeschalteten Verbraucher tagsüber Energie aus dem Netz beziehen. Die Steuerung erfolgt nur dann anhand der vorgeschlagenen Schaltzeiten, wenn die erwartete Kostenersparnis ein Validierungskriterium erfüllt. Das Validierungskriterium wird so gewählt, dass das Risiko höherer Kosten für möglichst viele betroffene Stromnutzer gering ist. Ein positiver Erwartungswert in Bezug auf die Kostenersparnis reicht somit nicht aus. Dadurch lässt sich die Akzeptanz einer entsprechenden Steuerung bei den Nutzern erhöhen.

Die erwartete Kostenersparnis kann auch negativ sein und damit erhöhten Kosten entsprechen. Sie wird letztlich basierend mindestens auf den vorgeschlagenen Schaltzeiten, historischen Wetterdaten und/oder historischen Wetter-Prognosedaten, historischen Produktionsdaten und Tarifdaten eines Stromlieferanten, bestimmt. Die genannten Informationen können direkt in die Berechnung einfliessen oder durch Modelle repräsentiert sein. Nebst den genannten Informationen können zudem weitere Grössen in die Berechnung einfliessen.

Wird das Validierungskriterium nicht erfüllt, kann die Steuerung der anhand der Produktionsprognose definierten vorgeschlagenen Schaltzeiten unterbleiben, und die Nutzung des Verbrauchers wird z. B. während des gesamten betrachteten Zeitraums (z. B. 24 Stunden) ganz freigegeben, oder der Verbraucher wird gemäss einem fixen Plan eingeschaltet (z. B. während eines Zeitraums mit generell reduziertem Strombedarf, namentlich in den Nachtstunden). Es ist ebenfalls möglich, alternative vorgeschlagene Schaltzeiten zu definieren, indem gewisse Randbedingungen der Berechnung angepasst werden, und mit diesen die Validierung nochmals zu durchlaufen.

Eine mögliche Anlage zur Durchführung des erfindungsgemässen Verfahrens umfasst:
a) mehrere lokale Photovoltaik-Produktionsanlagen;
b) mehrere, jeweils einer der lokalen Photovoltaik-Produktionsanlagen zugeordnete lokale Stromverbraucher, die zum Strombezug an die jeweilige lokale Photovoltaik-Produktionsanlage und an ein Stromnetz angeschlossen sind;
c) eine zentrale Steuerstelle, die einen Strombezug der lokalen Stromverbraucher steuern kann;
d) eine Verarbeitungseinrichtung zur Definition und Übermittlung von Schaltzeiten für die lokalen Stromverbraucher an die zentrale Steuerstelle;
   wobei
e) die Verarbeitungseinrichtung eine Produktionsüberschussprognose in Bezug auf die lokale Photovoltaik-Produktionsanlage für ein zukünftiges Zeitintervall erstellt, basierend auf Wetter-Prognosedaten für das Zeitintervall;
f) vorgeschlagene Schaltzeiten basierend auf der Produktionsüberschussprognose definiert werden;
g) die Verarbeitungseinrichtung eine erwartete Kostenersparnis für einen Strombezug des lokalen Stromverbrauchers bestimmt, basierend auf den Wetter-Prognosedaten für das Zeitintervall, den vorgeschlagenen Schaltzeiten, historischen Wetterdaten und/oder historischen Wetter-Prognosedaten, historischen Produktionsdaten und Tarifdaten eines Stromlieferanten; und
h) die Verarbeitungseinrichtung die vorgeschlagenen Schaltzeiten an die Steuerstelle übermittelt, falls die erwartete Kostenersparnis ein Validierungskriterium erfüllt.

Die Steuerung der lokalen Stromverbraucher durch die zentrale Steuerstelle erfolgt insbesondere mit der seit einigen Jahrzehnten bekannten, so genannten Rundsteuertechnik. Das Rundsteuersystem besteht aus einer Sendeanlage (gesteuert durch die zentrale Steuerstelle) und mehreren Empfängern, wobei die Signale bei dieser Technik über das Stromnetz versendet werden. Die zentrale Rundsteuersendeanlage befindet sich typischerweise in einer Transformatorenstation (Unterstation) des elektrischen Energieversorgungsnetzes und deckt jeweils eine Teilmenge des Netzes ab. Die dezentralen Empfänger befinden sich unmittelbar vor den zu schaltenden Lasten, also beispielsweise in einem Haushalt vor dem Warmwasserboiler (elektrische Warmwasseraufbereitung mit Speicherung). Die Rundsteuersendeanlage sendet zu einem bestimmten Zeitpunkt ein Signal aus, welches bei der Empfängeranlage einen Schaltprozess auslöst: Der elektrische Verbraucher wird freigeschaltet (EIN). Nach einer bestimmten Dauer wird über ein weiteres Signal der elektrische Verbraucher wieder vom Netz getrennt (AUS). Die Rundsteueranlage ist in der Lage, über eine entsprechende Codierung mehrere Gruppen von elektrischen Verbrauchern anzusteuern. So können zum Beispiel in einem bestimmten Teil des Verteilnetzes die Boiler in 8 verschiedene Gruppen eingeteilt sein. Wird von der Rundsteuersendeanlage ein entsprechend codiertes Signal ausgesendet, werden alle Boiler, welche dieser Signalgruppe angehören, eingeschaltet oder ausgeschaltet. Damit können verschiedene Gruppen von Lasten zu unterschiedlichen Zeiten ein- oder ausgeschaltet werden. Damit kann eine bessere zeitliche Verteilung der Lasten und somit eine gleichmässigere Auslastung des Elektrizitätsnetzes und der Kraftwerke erreicht werden. Moderne Rundsteueranlagen sind in der Lage, über eine Sendeanlage mehrere hundert verschiedene Gruppen von Verbrauchern anzusteuern.

Warmwasser-Boiler werden üblicherweise in einem Zeitfenster nachts freigeschaltet. Photovoltaik-Anlagen liefern in diesem Zeitfenster in der Regel keine elektrische Leistung, der Energiebedarf des Warmwasser-Boilers wird nachts somit vollständig aus dem Stromnetz gedeckt, die von der Photovoltaik-Anlage bereitgestellte Energie wird nur in Ausnahmefällen für das Aufheizen des Warmwasser-Boilers genutzt. In den meisten Tarifmodellen der Stromversorger kann die Energie nachts zu einem tieferen Tarif bezogen werden, die Energie für das Aufheizen des Warmwasser-Boilers wird also gemäss diesem tieferen Tarif abgerechnet. Wird der Warmwasser-Boiler stets tagsüber aufgeheizt, kann bei gutem Wetter der Energiebedarf in der Regel von der Photovoltaik-Anlage gedeckt werden, es fallen also keine zusätzlichen Energiekosten an. Bei schlechtem Wetter und entsprechend reduzierter Sonneneinstrahlung reicht die von der PV-Anlage erzeugte Leistung jedoch nicht aus und der benötigte Strom muss ganz oder teilweise aus dem Stromnetz bezogen werden. Tagsüber kommt in der Regel ein höherer Tarif zum Einsatz. Bei schlechtem Wetter bezahlt der Kunde somit mehr als bei einer Schaltzeit in den Nachtstunden.

Mit dem erfindungsgemässen Verfahren lassen sich also sowohl die Nachteile einer fixen Nachtschaltung als auch diejenigen einer fixen Tagschaltung vermeiden, ohne dass die einfache und etablierte Steuerung durch Rundsteueranlagen aufgegeben werden muss.

Mit Hilfe des erfindungsgemässen Verfahrens lässt sich in Bezug auf eine mittels Rundsteueranlage gemeinsam geschaltete Gruppe von Verbrauchern das Risiko, dass einzelne Betreiber solcher Verbraucher höhere Kosten tragen müssen, stark reduzieren. Die Steuerstelle steuert in diesem Fall mehrere, verschiedenen Photovoltaik-Produktionsanlagen zugeordnete lokale Stromverbraucher gruppenweise. Das erfindungsgemässe Verfahren ist besonders für diesen Fall gut geeignet, weil die Definition der Schaltzeiten zunächst unabhängig von einer möglichen Kostenersparnis (und damit unabhängig von Besonderheiten der einzelnen Nutzer) erfolgt und die mit der Freischaltung verbundenen Risiken gesondert, in einem zweiten Schritt berücksichtigt werden. Dieselben ermittelten Schaltzeiten können somit - falls die Validierung im zweiten Schritt erfolgreich ist - an alle Verbraucher der jeweiligen Gruppe übermittelt werden.

Das erfindungsgemässe Verfahren ist jedoch nicht auf die Nutzung mit der erwähnten Anlage beschränkt. So kann insbesondere die Verarbeitungseinrichtung auch dezentral angeordnet sein bzw. dezentrale Steuerungen mit Schaltzeiten versorgen. Grundsätzlich kann das erfindungsgemässe Verfahren zudem auch auf einzelne Photovoltaik-Produktionsanlagen und/oder einzelne Stromverbraucher angewandt werden.

Mit Vorteil wird zur Bestimmung der erwarteten Kostenersparnis ein Machine-Learning-Modell eingesetzt. Dadurch lassen sich verschiedene Einflüsse, insbesondere Wetterdaten bzw. Wetter-Prognosedaten und gemessene Produktionskurven von PV-Anlagen, auf einfache Weise berücksichtigen. Auch die regelmässige oder laufende Aktualisierung des Modells gestaltet sich sehr einfach.

Besonders geeignet sind generalisierte Additive Modelle (GAM). Diese können mit historischen Wetterdaten bzw. Wetter-Prognosedaten und gemessenen Produktionskurven von zahlreichen Photovoltaik-Anlagen trainiert werden. Um unterschiedlichen, z. B. klimatischen und meteorologischen Bedingungen in verschiedenen Regionen Rechnung tragen zu können, können mehrere regionale Modelle erstellt werden, die jeweils mit Daten der entsprechenden Region trainiert werden.

Bevorzugt wird das Machine-Learning-Modell trainiert, indem basierend auf historischen Wetter-Prognosedaten Schaltzeiten für mehrere Zeitintervalle definiert und eine aufgrund dieser Schaltzeiten resultierende Kostenersparnis basierend auf den in den Zeitintervallen gemessenen historischen Produktionsdaten bestimmt wird. Die Kostenersparnis kann direkt im Rahmen des Modells bestimmt werden, oder das Modell liefert Werte für den Strombezug bzw. die Einspeisung, und aus diesen wird dann anhand der Tarifdaten des Stromlieferanten die Kostenersparnis berechnet.

Mit Vorteil werden zum Training des Machine-Learning-Modells Kostenersparnisse von mehreren lokalen Stromverbrauchern und mehreren lokalen Photovoltaik-Produktionsanlagen berücksichtigt. Dadurch lässt sich die Datenbasis verbreitern. Werden mehrere, an unterschiedliche lokale PV-Produktionsanlagen gekoppelte, lokale Verbraucher zentral und gemeinsam geschaltet, z. B. durch eine Rundsteueranlage, kann so zudem die Kostenersparnis bzw. das Risiko erhöhter Kosten für die Gesamtheit der berücksichtigten PV-Produktionsanlagen bzw. Verbraucher bestimmt werden.

Im Rahmen des erfindungsgemässen Verfahrens muss zum Erstellen der Produktionsüberschussprognose nicht zwingend ein Machine-Learning-Modell eingesetzt werden. Die Prognose kann beispielsweise auch anhand von Berechnungen aus den Wetter-Prognosedaten direkt erstellt werden.

Bevorzugt ist das Validierungskriterium eine erwartete Kostenersparnis bei einem p-Quantil einer Verteilung der erwarteten Kostenersparnisse einer Gruppe von Stromverbrauchern. In Abhängigkeit der verwendeten unterschiedlichen PV-Produktionsanlagen und der unterschiedlichen Verbrauchsprofile werden im Rahmen der Validierung verschiedene Werte der Kostenersparnis resultieren. Da erhöhte Kosten nur in sehr beschränktem Umfang toleriert werden, lässt sich durch die Berücksichtigung eines Quantils sicherstellen, dass höchstens eine (kleine) Minderheit von erhöhten Kosten betroffen ist.

So kann das Validierungskriterium z. B. so gewählt werden, dass die vorgeschlagenen Schaltzeiten dann validiert werden, wenn die erwartete Kostenersparnis bei dem p-Quantil positiv ist, wobei p ≤ 30 %, bevorzugt p ≤ 20 %. Bei mindestens 70 bzw. 80% der betroffenen Nutzer ist somit eine positive Kostenersparnis zu erwarten.

Werden mehrere lokale Verbraucher in Abhängigkeit derselben Schaltzeiten gesteuert, so kann das Validierungskriterium entsprechend eine erwartete Kostenersparnis bei einem p-Quantil einer Verteilung der erwarteten Kostenersparnisse bei den Photovoltaik-Produktionsanlagen einer jeweiligen Gruppe sein. Dabei ist es nicht notwendig, dass die PV-Produktionsanlagen exakt diejenigen sind, welche die betroffenen lokalen Verbraucher versorgen können. So können z. B. mehrere Gruppen anhand derselben Schaltzeiten gesteuert werden, oder es werden PV-Produktionsanlagen in die Berechnung der vorgeschlagenen Schaltzeiten und/oder die Validierung einbezogen, die keine gesteuerten Verbraucher versorgen.

Mit Vorteil werden zur Bestimmung der resultierenden Kostenersparnisse historische Verbrauchsprofile in Bezug auf die lokalen Photovoltaik-Produktionsanlagen berücksichtigt. Diese Verbrauchsprofile betreffen also nicht nur den (steuerbaren) lokalen Verbraucher, sondern den gesamten Strombezug des Betreibers der lokalen Photovoltaik-Produktionsanlage. Die Berücksichtigung der lokalen Verbrauchsprofile erfolgt im Rahmen des Machine-Learning-Modells oder explizit in Abhängigkeit der jeweiligen Jahreszeit, der Witterung oder anderer Einflussparameter.

Mit Vorteil werden zur Bestimmung der resultierenden Kostenersparnisse Einspeisungen der lokalen Photovoltaik-Produktionsanlagen in das Stromnetz berücksichtigt. Diese werden in der Regel vergütet, haben somit einen Einfluss auf die letztendlich resultierende Kostenersparnis.

Im Rahmen der Erstellung der Produktionsüberschussprognose erstellt das Modell aus den Wetter-Prognosedaten eine Prognose für die PV-Produktion einer PV-Anlage mit normierter Leistung. Die Wetter-Prognosedaten beinhalten insbesondere die Parameter Globalstrahlung und Temperatur.

Auch hier können, um unterschiedlichen, z. B. klimatischen und meteorologischen Bedingungen in verschiedenen Regionen Rechnung tragen zu können, mehrere regionale Modelle erstellt werden, die jeweils mit Daten der entsprechenden Region trainiert werden.

Zur Definition der vorgeschlagenen Schaltzeiten werden bevorzugt Zeitfenster mit maximalem erwartetem Produktionsüberschuss identifiziert, die eine vorgegebene Mindestdauer aufweisen. Dadurch lässt sich das Risiko, dass die von der lokalen PV-Anlage bezogene Leistung zum Betreiben des lokalen Verbrauchers nicht ausreicht und dass deswegen erhöhte Kosten entstehen, minimiert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Energieversorgungsnetzes mit lokalen Photovoltaik-Produktionsanlagen und lokalen Verbrauchern;
- Fig. 2: ein Blockdiagramm zur Erläuterung eines erfindungsgemässen Verfahrens;
- Fig. 3A, B: eine Darstellung des Verlaufs der modellierten Photovoltaik-Produktion an zwei Tagen und definierte vorgeschlagene Schaltzeiten;
- Fig. 4A, B: Verteilungen der erwarteten Kundenersparnisse an den zwei Tagen;
- Fig. 5: einen Vergleich zwischen den Ergebnissen des Vorhersagemodells und den tatsächlichen Kostenersparnissen;
- Fig. 6: eine Darstellung der Auswirkungen einer Freischaltung tagsüber.

Grundsätzlich sind in den Figuren gleiche Teile mit gleichen Bezugszeichen versehen.

### Wege zur Ausführung der Erfindung

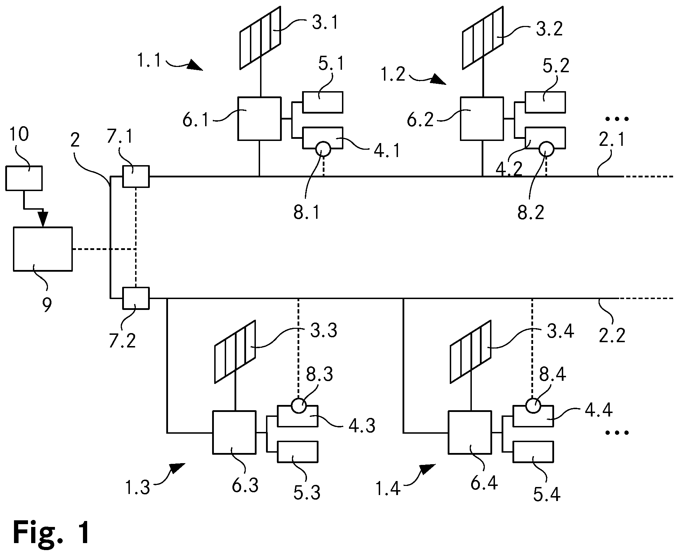

Die Figur 1 ist eine schematische Darstellung eines Energieversorgungsnetzes mit lokalen Photovoltaik-Produktionsanlagen und lokalen Verbrauchern.

Dargestellt sind nur jeweils zwei Nutzer 1.1, 1.2; 1.3, 1.4, die sich in zwei verschiedenen geografischen Regionen befinden und an ein Stromnetz 2 angeschlossen sind. Alle vier Nutzer 1.1...4 weisen eigene Photovoltaik-Anlagen 3.1, 3.2, 3.3, 3.4 auf. In Wirklichkeit versorgt das Stromnetz natürlich eine viel grössere Anzahl von Nutzern, die sich in einer Mehrzahl von Regionen befinden und die nicht alle mit einer eigenen Photovoltaik-Anlage ausgestattet sind, sondern lediglich Strombezüger sind oder andere Einrichtungen zur Erzeugung von Strom (z. B. Blockheizkraftwerke o. ä.) aufweisen.

Die Nutzer 1.1...4 besitzen Stromverbraucher 4.1, 4.2, 4.3, 4.4, deren Energiebezug sich sich zentral über eine so genannte Rundsteueranlage steuern, d. h. in gewissen Zeiträumen freigeben oder sperren, lässt. Die Nutzer 1.1...4 besitzen weiter Stromverbraucher 5.1, 5.2, 5.3, 5.4, deren Energiebezug sich nicht in dieser Weise zentral steuern lässt. Die Verbraucher 4.1...4, 5.1...4 und die Photovoltaik-Anlagen 3.1...4 jeweils eines Nutzers 1.1...4 sind miteinander über geeignete und an sich bekannte Komponenten, insbesondere Wechselrichter, Regler, Verteilungen, Stromzähler usw. miteinander und mit dem Stromnetz 2 gekoppelt. Dies ist der Einfachheit halber in ihrer Gesamtheit repräsentiert durch die Funktionsblöcke 6.1, 6.2, 6.3, 6.4. Namentlich lassen sich die Stromverbraucher 4.1...4, 5.1...4 sowohl vom Stromnetz 2 als auch von der jeweils lokalen Photovoltaik-Anlage 3.1...4 mit Strom versorgen.

Jede der beiden Regionen wird durch einen gesonderten Strang 2.1, 2.2 des Stromnetzes 2 versorgt. Die beiden Stränge 2.1, 2.2 repräsentieren z. B. Netzabschnitte, welche jeweils einer Transformatorenstation (Unterstation) des Stromnetzes 2 zugeordnet sind. Ein Rundsteuersystem umfasst Sendeanlagen 7.1, 7.2 für jeden Strang 2.1, 2.2, welche von einer zentralen Steuerstelle 9 des Netzbetreibers gesteuert werden. Die Sendeanlagen 7.1, 7.2 sind in der jeweiligen Transformatorenstation untergebracht und vermögen mit über das Stromnetz übermittelten Signalen Empfänger 8.1, 8.2, 8.3, 8.4 des Rundsteuersystems zu steuern, welche sich unmittelbar vor den zu schaltenden Verbrauchern 4.1...4 befinden, beispielsweise in einem Haushalt vor dem Warmwasser-Boiler.

Die Sendeanlage 7.1, 7.2 sendet zu einem bestimmten Zeitpunkt ein Signal aus, welches beim Empfänger 8.1...4 einen Schaltprozess auslöst: Der elektrische Verbraucher 4.1...4 wird freigeschaltet (EIN). Nach einer bestimmten Dauer wird über ein weiteres Signal der elektrische Verbraucher 4.1...4 wieder vom Netz getrennt (AUS). Die Rundsteueranlage ist in der Lage, über eine entsprechende Codierung mehrere Gruppen von elektrischen Verbrauchern anzusteuern. So können zum Beispiel in einem bestimmten Teil des Verteilnetzes die Boiler in mehrere Gruppen eingeteilt sein. Wird von der Rundsteuersendeanlage ein entsprechend codiertes Signal ausgesendet, werden alle Boiler, welche dieser Signalgruppe angehören, eingeschaltet oder ausgeschaltet. Damit können verschiedene Gruppen von Lasten zu unterschiedlichen Zeiten ein- oder ausgeschaltet werden.

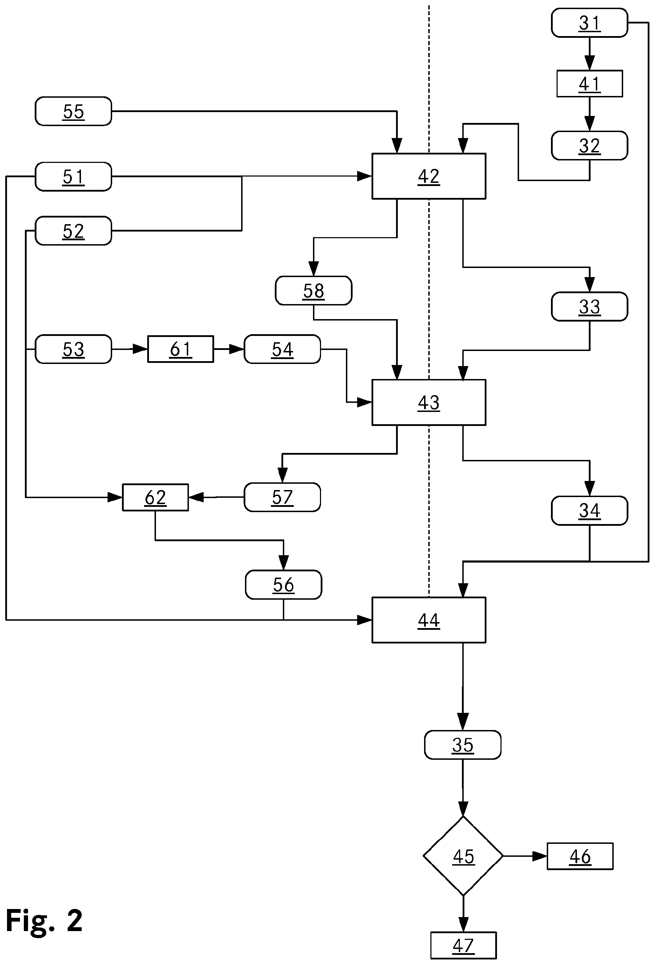

Die zentrale Steuerstelle 9 des Netzbetreibers, welche die Sendeanlagen 7.1, 7.2 steuert, empfängt Schaltzeiten von einer Verarbeitungseinrichtung 10. Diese definiert die Schaltzeiten mit Hilfe des erfindungsgemässen Verfahrens, welches im Folgenden und mit Bezug auf die weiteren Figuren 2 - 6 näher beschrieben wird. Die Figur 2 zeigt ein Blockdiagramm zur Erläuterung des beschriebenen Verfahrens.

Um unterschiedlichen klimatischen Gegebenheiten und Witterungsunterschieden Rechnung zu tragen, ist das Versorgungsgebiet des Netzbetreibers in mehrere geografische Regionen aufgeteilt. Zunächst liest die Verarbeitungseinrichtung 10 pro Region stündliche Wetter-Prognosedaten 31 ein. Derartige Daten werden für jeden Tag für alle Regionen geliefert:

| **Zeitstempel** | **Globalstrahlung [W/m²]** | **Temperatur [°C]** |
|---|---|---|
| 00:00:00 | 0 | 10.8 |
| 01:00:00 | 0 | 9.8 |
| 02:00:00 | 0 | 9.8 |
| 03:00:00 | 0 | 9 |
| 04:00:00 | 0 | 9.2 |
| 05:00:00 | 1 | 9.5 |
| 06:00:00 | 47 | 8.5 |
| 07:00:00 | 161 | 10.2 |
| 08:00:00 | 205 | 11.8 |
| 09:00:00 | 373 | 13.3 |
| 10:00:00 | 550 | 14.7 |
| 11:00:00 | 620 | 15.6 |
| 12:00:00 | 726 | 16.9 |
| 13:00:00 | 755 | 17.1 |
| 14:00:00 | 670 | 18.4 |
| 15:00:00 | 543 | 17.8 |
| 16:00:00 | 391 | 17.1 |
| 17:00:00 | 234 | 16 |
| 18:00:00 | 82 | 14.9 |
| 19:00:00 | 1 | 12.3 |
| 20:00:00 | 0 | 10.7 |
| 21:00:00 | 0 | 9.9 |
| 22:00:00 | 0 | 9.2 |
| 23:00:00 | 0 | 8.6 |

Diese Daten werden anschliessend interpoliert (Interpolation 41), um viertelstündliche Werte für die Wetter-Prognosedaten 32 zu erhalten.

Als nächstes wird in der Verarbeitungseinrichtung 10 eine Produktionsprognose 33 für die erfasste Region erzeugt, wobei ein generalisiertes Additives Modell (GAM) 42 eingesetzt wird. Als Eingabeparameter dienen die eingelesenen (und interpolierten) Wetter-Prognosedaten 32. Das trainierte Modell liefert die Prognose 33 für die Stromproduktion einer PV-Anlage mit normierter Leistung. Die Zeitauflösung entspricht dabei derjenigen der interpolierten Wetter-Prognosedaten (also viertelstündlich).

Das verwendete GAM 42 wurde dazu vorgängig mit gemessenen regionalen Wetterdaten 51 und gemessenen Produktionskurven 52 von zahlreichen Photovoltaik-Anlagen in der entsprechenden Region trainiert.

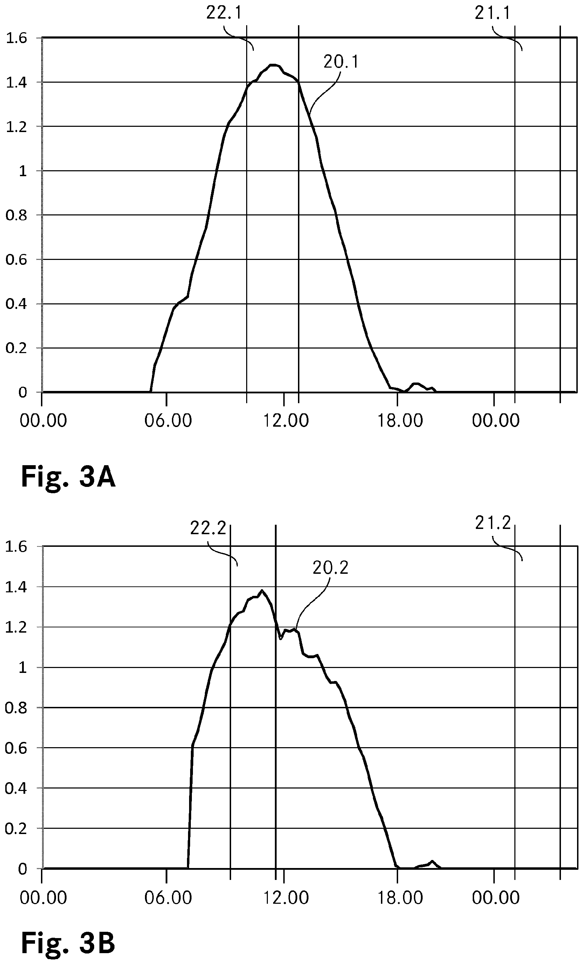

Die Figur 3 zeigt resultierende Prognosekurven 20.1, 20.2 für zwei bestimmte Tage im Jahr 2014, nämlich den 13. April (Figur 3A) und den 29. Mai (Figur 3B), in einer bestimmten Region. Angegeben ist die erwartete Produktion in Einheiten von kWh/15 min, also ein Viertel der mittleren Leistung, berechnet für eine Photovoltaik-Anlage mit 10 kW Spitzenleistung.

Als nächstes werden anhand der Produktionsprognose 33 durch einen Schaltzeit-Algorithmus 43 mögliche Schaltzeiten 34 bestimmt. Beim dargestellten Ausführungsbeispiel wird davon ausgegangen, dass primär Warmwasser-Boiler durch die Rundsteueranlage gesteuert werden sollen. Um zu gewährleisten, dass stets ausreichend warmes Wasser zur Verfügung steht, werden die Boiler immer in einem vorgegebenen Zeitfenster in den Nachtstunden eingeschaltet. Das Intervall 21.1, 21.2 ist in den Figuren 3A, 3B ersichtlich. Falls die erwartete Photovoltaik-Produktion ausreicht, werden die Warmwasser-Boiler zusätzlich tagsüber freigeschaltet. Eine solche Freischaltung hat zur Folge, dass im Freigabefenster nachts weniger Energie aus dem Netz bezogen werden muss.

Als Ausgangsdaten für die Ermittlung der Schaltzeiten werden die erwähnte PV-Produktionsprognose 33 für einen Tag sowie ein mittels Aggregierung 61 aus gemessenen Verbrauchsprofilen 53 von Einzelkunden gewonnenes durchschnittliches Verbrauchsprofil 54 herangezogen. Aus der Differenz der PV-Produktionsprognose 33 und des durchschnittlichen Verbrauchsprofils 54 wird der erwartete Produktionsüberschuss ermittelt.

Der Schaltzeit-Algorithmus 43 bildet optimale Schaltzeiten 34 mit maximalem erwartetem Produktionsüberschuss. Je nach Typ des zu schaltenden Geräts wird eine benötigte Schaltdauer festgelegt. Ferner ist eine Minimaldauer für eine Freischaltung (z. B. ½ h) vorgegeben. Es werden nun anhand der Prognosekurve 20.1, 20.2 diejenigen Zeitfenster gesucht, welche diese Randbedingungen erfüllen und einem maximalen Produktionsüberschuss (Fläche unter der Kurve in dem Zeitfenster bzw. den Zeitfenstern) entsprechen.

In den Figuren 3A, 3B sind auch die optimalen Intervalle 22.1, 22.2 für die Freigabe tagsüber ersichtlich. Es ist deutlich zu erkennen, dass die Intervalle 22.1, 22.2 die Spitzen der jeweiligen Prognosekurven 20.1, 20.2 erfassen.

Als Nächstes wird die erwartete Kostenersparnis bei einer Steuerung der Stromverbraucher anhand der erhaltenen Schaltzeiten 34 bestimmt. Die Schaltzeiten 34 werden also einer Validierung unterzogen, bevor sie an die Rundsteueranlage weitergegeben werden. Dazu werden historische Wetter-Prognosedaten 55, gemessene PV-Produktionsdaten 52 und individuelle Verbrauchsprofile 53 verwendet, die einen Zeitraum von mindestens einem Jahr erfassen. Die Kostenersparnis ergibt sich aus einem Vergleich der Strombezüge mit und ohne (zusätzliche) Freischaltung tagsüber, wobei im Rahmen dieses Vergleichs auch der relevante Tarif des Stromnetzbetreibers berücksichtigt wird.

Mittels eines weiteren generalisierten Additiven Modells (GAM) 44 wird für die Freischaltung tagsüber das 10%-Quantil 35 der aufgrund der möglichen Schaltzeiten 34 zu erwartenden Kundenersparnis prognostiziert. Falls dieser Wert negativ ist (Entscheidung 45), wird die Freigabe tagsüber verworfen (Schritt 46). Das Vorhersagemodell benötigt als Input nebst den Schaltzeiten 34 die regionalen Wetterprognosen 31 (Globalstrahlungswerte) des zu überprüfenden Tages und die Mittelwerte für die Globalstrahlung für den entsprechenden Monat in der entsprechenden Region (in Form eines gemittelten Tagesverlaufes, also einer Kurve über 24 Stunden). Die monatlichen Mittelwerte für die Globalstrahlung pro Region sind anhand der gemessenen Wetterdaten 51 gebildet worden und als Tabellen hinterlegt. Sie ermöglichen eine bessere Klassifizierung der Wetterlage, indem die Wetter-Prognosedaten für die Globalstrahlung für die Ermittlung der erwarteten Kostenersparnis in Bezug auf den betrachteten Tag mit dem monatlichen Mittelwert gewichtet werden. Die Mittelung des Tagesverlaufs der Globalstrahlung über jeweils einen Monat ermöglicht eine gezielte Berücksichtigung der jahreszeitlichen Schwankungen, blendet aber Wetterschwankungen weitgehend aus.

In der folgenden Tabelle sind die benötigten Daten für eine Freischaltvalidierung für den 13. April 2014 aufgeführt (vgl. Figur 3A):

| **Zeitstempel** | **Globalstrahlung [W/m²]** | **Mittlere Globalstrahlung im April [W/m²]** |
|---|---|---|
| 13.04.2014 07:00 | 161 | 26 |
| 13.04.2014 08:00 | 205 | 121 |
| 13.04.2014 09:00 | 373 | 227 |
| 13.04.2014 10:00 | 550 | 351 |
| 13.04.2014 11:00 | 620 | 418 |
| 13.04.2014 12:00 | 726 | 450 |
| 13.04.2014 13:00 | 755 | 441 |
| 13.04.2014 14:00 | 670 | 429 |
| 13.04.2014 15:00 | 543 | 347 |
| 13.04.2014 16:00 | 391 | 226 |
| 13.04.2014 17:00 | 234 | 116 |
| 13.04.2014 18:00 | 82 | 26 |

Für diesen Tag ergibt das Vorhersagemodell für das 10%-Quantil 35 der erwarteten Kostenersparnis den Wert 4.9 Rp. Da dieser Wert positiv ist, wird die Freigabe tagsüber angenommen (Schritt 47). Für den 29. Mai 2014 (vgl. Figur 3B) hingegen beträgt dieser Wert -40 Rp., und die Freigabe tagsüber wird abgelehnt (Schritt 46).

Um das Vorhersagemodell zu trainieren, werden gemessene Wetterdaten 51 und resultierende Kundenersparnisse 56 verwendet. Diese Ersparnisse 56 der Kunden werden anhand einer Simulation 62 berechnet, die als Input
- gemessene Produktionsdaten 52 mehrerer Photovoltaikanlagen (Parameter: Zeitstempel und Energieproduktion),
- Kunden-Lastprofile 53 (Parameter: Zeitstempel und Energieverbrauch) und
- historische Freigabezeiten 57
verwendet. Die historischen Freigabezeiten 57 werden dabei mittels des Schaltzeit-Algorithmus 43 aus historischen PV-Produktionsprognosen 58 errechnet, diese wiederum ergeben sich anhand des generalisierten Additiven Modells (GAM) 42 aus den historischen Wetterprognosen 55.

Die Produktionsdaten und Lastprofile entstammen unterschiedlichen Datenquellen - die Photovoltaikproduktionsanlagen gehören nicht zu den jeweiligen Kunden. In der Simulation wird die Boilerlast jedes Verbrauchsprofils in das Freigabefenster tagsüber verschoben und es wird für jede Produktionsanlage die Ersparnis für den Kunden berechnet. Dadurch werden die Ersparnisse aller möglichen Kombinationen von Produktionsanlagen und Kunden-Lastprofilen miteinbezogen. Die folgende Tabelle zeigt beispielhaft die Resultate der Simulation für zwei verschiedene Kunden und drei verschiedene Produktionsanlagen an den zwei betrachteten Beispieltagen 13. April und 29. Mai 2014.

| **Datum** | **Simulierte Kundenersparnis [Rp.]** | **Kunde** | **Produktionsanlage** |
|---|---|---|---|
| 2014-04-13 | 48.7 | A | 1 |
| 2014-04-13 | 51 | A | 2 |
| 2014-04-13 | 30.9 | A | 3 |
| 2014-04-13 | 23.1 | B | 1 |
| 2014-04-13 | 25.6 | B | 2 |
| 2014-04-13 | 14.4 | B | 3 |
| | | | |
| 2014-05-29 | -35 | A | 1 |
| 2014-05-29 | -39.4 | A | 2 |
| 2014-05-29 | -15.1 | A | 3 |
| 2014-05-29 | -2.1 | B | 1 |
| 2014-05-29 | 3.62 | B | 2 |
| 2014-05-29 | 7.55 | B | 3 |

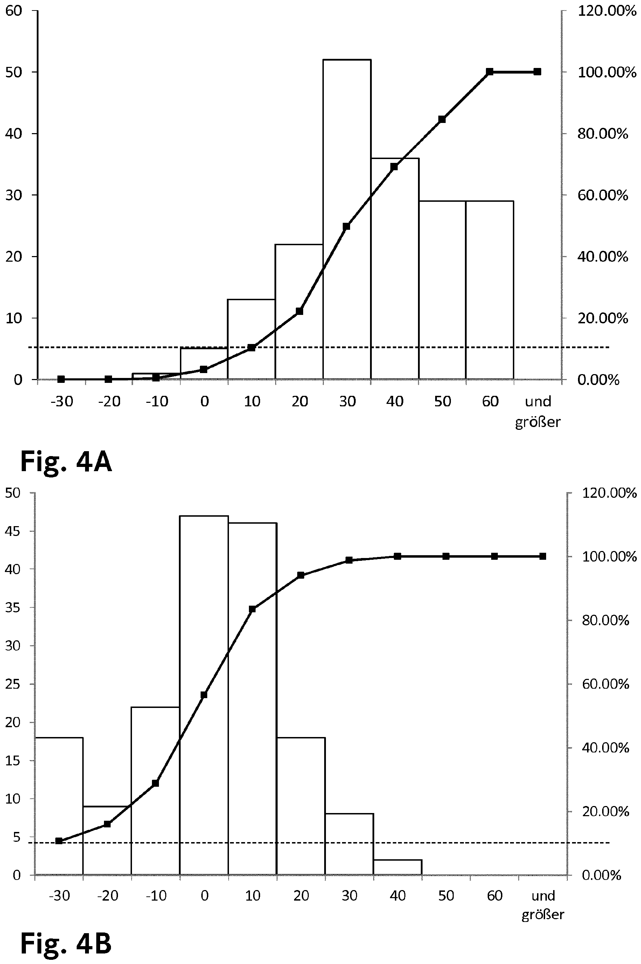

Wie der Tabelle entnommen werden kann, variieren die Kundenersparnisse recht stark je nach Anlage und Kunde für den gleichen Tag. Deshalb ist es sinnvoll, für jeden gewählten Tag die gesamte Verteilung der simulierten Kundenersparnisse zu betrachten. Die entsprechenden Histogramme für die beiden Tage sind in den Figuren 4A (13. April 2014) bzw. 4B (29. Mai 2014) dargestellt. Die horizontale Achse repräsentiert die Kundenersparnis in Rp., angegeben sind jeweils die oberen Bereichsgrenzen. Die durchgezogene Linie gibt die kumulierte Anzahl der Werte bis zur jeweiligen oberen Bereichsgrenze an (darauf bezieht sich die Prozentskala rechts der Grafik). Der Mittelwert ist durch die vertikale gestrichelte Linie angegeben. Der Mittelwert ist in beiden Fällen positiv - es ist aber ohne Weiteres ersichtlich, dass im Fall der Figur 4A das 10%-Quantil bei ca. 5 Rp. liegt, im Fall der Figur 4B zwischen -40 und -30 Rp. Die Schaltzeiten werden somit im ersten Fall an die Rundsteueranlage übermittelt, weil bei einem überwiegenden Teil mit einer Kostenersparnis zu rechnen ist. Im zweiten Fall erfolgt keine Übermittlung, weil mindestens 10 % der erfassten Nutzer mit nicht unerheblichen Mehrkosten rechnen müssten.

Der Wert von 10 % hat sich aus verschiedenen empirischen Tests mit verschiedenen p-Quantilen ergeben. Die Modellqualität wurde geprüft, indem eine Prognose für 51 Testtage, basierend auf jeweiligen Wetter-Prognosedaten erstellt und mit dem Resultat der Simulation verglichen wurde. Die 51 Testtage waren dabei selbstverständlich nicht Teil des Sets zum Trainieren des für die Simulation verwendeten Modells.

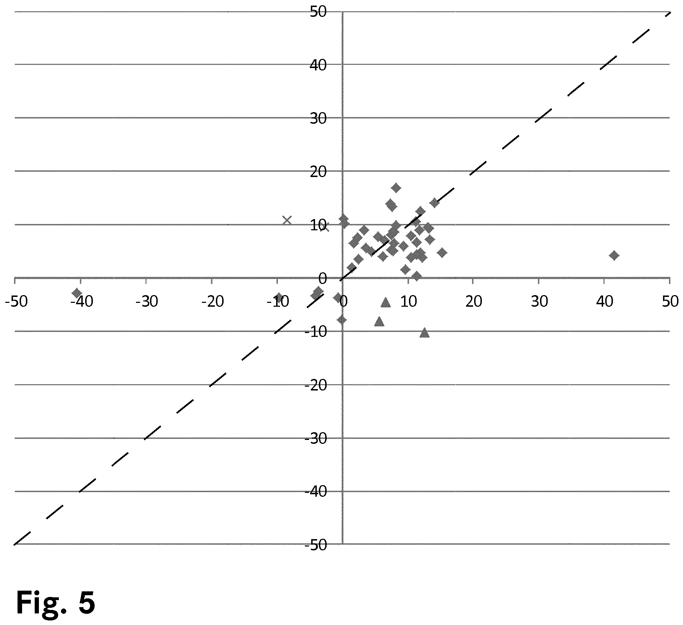

Die Figur 5 zeigt das Ergebnis des Tests. In der vertikalen Achse ist das Ergebnis des Vorhersagemodells (Kostenersparnis in Rp.) eingetragen, in der horizontalen Achse die Kostenersparnis für das 10%-Quantil, die aufgrund der effektiven Produktion bei einer Freischaltung tagsüber aufgetreten wäre. Die überwiegende Mehrzahl der Tage wurde im Rahmen der Validierung korrekt eingestuft. An drei Tagen (Dreiecke, rechter unterer Quadrant) wurde die Freigabe der Schaltzeiten zu Unrecht verweigert, an zwei Tagen (Kreuze, linker oberer Quadrant) erfolgte eine Freigabe, obwohl die Kostenersparnis für das 10%-Quantil (leicht) negativ ausgefallen ist. Nur in knapp 4 % der Fälle erfolgte somit - bezogen auf das 10%-Quantil - eine Vorhersage, bei denen die entsprechende Freigabe bei 10% der Kunden zu erhöhten Kosten geführt haben dürfte.

Falls die Validierung ein positives Ergebnis liefert, werden die nun validierten Schaltzeiten von der Verarbeitungseinrichtung 10 an die zentrale Steuerstelle 9 des Netzbetreibers weitergegeben (Schritt 47).

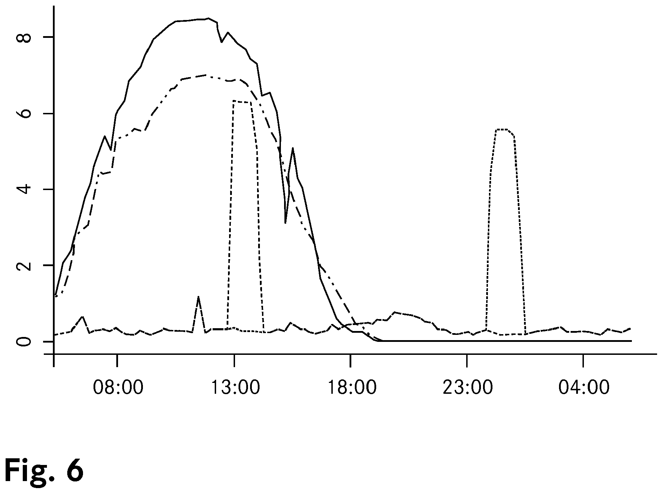

Die Figur 6 ist eine Darstellung der Auswirkungen einer Freischaltung tagsüber. Gezeigt ist der Produktions- und Lastverlauf während eines Tages, von 06.00-06.00 Uhr. Die vertikale Achse gibt die produzierte bzw. verbrauchte Leistung in kW an. Die prognostizierte PV-Produktion (Kurve 71, strichpunktiert) weist ein Maximum um die Mittagszeit auf. Wie aus der Darstellung ersichtlich ist, entspricht der Verlauf der tatsächlichen PV-Produktion (Kurve 72, durchgehend) weitgehend der Prognose. Anstelle des Verbrauchsverlaufs mit Nachteinschaltung (Kurve 73, gepunktet) resultiert aufgrund der Freigabe der Tageinschaltung der Verlauf gemäss Kurve 74 (gestrichelt). Der Energiebedarf des Boilers kann tagsüber und somit mit Strom aus Photovoltaik gedeckt werden.

Die Erfindung ist nicht auf das beschriebene Ausführungsbeispiel beschränkt. So können zusätzliche Daten für die Berechnung der Freischaltzeit oder das Trainieren der Machine-Learning-Modelle herangezogen werden, oder es werden gewisse Daten nicht berücksichtigt. Das Verfahren ist nicht auf die Beeinflussung einer Rundsteueranlage eingeschränkt, und die steuerbaren Verbraucher können in gewissen System nicht nur ein- und ausgeschaltet, sondern beispielsweise auch in ihrem Leistungsbezug geregelt werden.

Zusammenfassend ist festzustellen, dass die Erfindung ein Verfahren zur Steuerung eines lokalen Stromverbrauchers schafft, mit welchem das Risiko einer negativen Kostenfolge minimiert wird.

## Patentansprüche

1. Verfahren zur Steuerung eines lokalen Stromverbrauchers (4.1...4.4), wobei der lokale Stromverbraucher (4.1...4.4) sowohl Strom aus einem Stromnetz (2) als auch von einer lokalen Photovoltaik-Produktionsanlage (6.1...6.4) beziehen kann, umfassend folgende Schritte:
a) Erstellen einer Produktionsüberschussprognose in Bezug auf die lokale Photovoltaik-Produktionsanlage (6.1...6.4) für ein zukünftiges Zeitintervall, basierend auf Wetter-Prognosedaten (31, 32) für das Zeitintervall;
b) Definieren von vorgeschlagenen Schaltzeiten für den lokalen Stromverbraucher (4.1 ...4.4) basierend auf der Produktionsüberschussprognose;
**gekennzeichnet durch** folgende Schritte:
c) Bestimmung einer erwarteten Kostenersparnis für einen Strombezug des lokalen Stromverbrauchers (4.1...4.4), basierend auf
- den Wetter-Prognosedaten (31, 32) für das Zeitintervall,
- den vorgeschlagenen Schaltzeiten (34),
- historischen Wetterdaten (51) und/oder historischen Wetter-Prognosedaten (55),
- historischen Produktionsdaten (52) und
- Tarifdaten eines Stromlieferanten; und
d) Steuerung eines Strombezugs des lokalen Stromverbrauchers (4.1...4.4) anhand der vorgeschlagenen Schaltzeiten, falls die erwartete Kostenersparnis ein Validierungskriterium erfüllt.

2. Verfahren nach Anspruch 1, **dadurch gekennzeichnet, dass** zur Bestimmung der erwarteten Kostenersparnis ein Machine-Learning-Modell eingesetzt wird.

3. Verfahren nach Anspruch 2, **dadurch gekennzeichnet, dass** das Machine-Learning-Modell trainiert wird, indem basierend auf historischen Wetter-Prognosedaten (55) Schaltzeiten für mehrere Zeitintervalle definiert und eine aufgrund dieser Schaltzeiten resultierende Kostenersparnis basierend auf den in den Zeitintervallen gemessenen historischen Produktionsdaten (52) bestimmt wird.

4. Verfahren nach Anspruch 3, **dadurch gekennzeichnet, dass** zum Training des Machine-Learning-Modells Kostenersparnisse von mehreren lokalen Stromverbrauchern und mehreren lokalen Photovoltaik-Produktionsanlagen berücksichtigt werden.

5. Verfahren nach Anspruch 3 oder 4, **dadurch gekennzeichnet, dass** das Validierungskriterium eine erwartete Kostenersparnis bei einem p-Quantil einer Verteilung der erwarteten Kostenersparnisse ist.

6. Verfahren nach Anspruch 5, **dadurch gekennzeichnet, dass** die vorgeschlagenen Schaltzeiten (34) validiert werden, wenn die erwartete Kostenersparnis bei dem p-Quantil positiv ist, wobei p ≤ 30 %, bevorzugt p ≤ 20 %.

7. Verfahren nach einem der Ansprüche 3 bis 6, **dadurch gekennzeichnet, dass** zur Bestimmung der resultierenden Kostenersparnisse historische Verbrauchsprofile (53) in Bezug auf die lokalen Photovoltaik-Produktionsanlagen (6.1...6.4) berücksichtigt werden.

8. Verfahren nach einem der Ansprüche 3 bis 7, **dadurch gekennzeichnet, dass** zur Bestimmung der resultierenden Kostenersparnisse Einspeisungen der lokalen Photovoltaik-Produktionsanlagen (6.1...6.4) in das Stromnetz (2) berücksichtigt werden.

9. Verfahren nach einem der Ansprüche 1 bis 8, **dadurch gekennzeichnet, dass** zur Definition der vorgeschlagenen Schaltzeiten (34) Zeitfenster mit maximalem erwartetem Produktionsüberschuss identifiziert werden, die eine vorgegebene Mindestdauer aufweisen.

10. Anlage zur Durchführung des Verfahrens nach einem der Ansprüche 1 bis 9, umfassend:
a) mehrere lokale Photovoltaik-Produktionsanlagen (6.1...6.4);
b) mehrere, jeweils einer der lokalen Photovoltaik-Produktionsanlagen (6.1...6.4) zugeordnete lokale Stromverbraucher (4.1...4.4), die zum Strombezug an die jeweilige lokale Photovoltaik-Produktionsanlage (6.1...6.4) und an ein Stromnetz (2) angeschlossen sind;
c) eine zentrale Steuerstelle (9), die einen Strombezug der lokalen Stromverbraucher (4.1...4.4) steuern kann;
d) eine Verarbeitungseinrichtung (10) zur Definition und Übermittlung von Schaltzeiten für die lokalen Stromverbraucher (4.1...4.4) an die zentrale Steuerstelle (9);
wobei
e) die Verarbeitungseinrichtung (10) eine Produktionsüberschussprognose in Bezug auf die lokale Photovoltaik-Produktionsanlage (6.1....6.4) für ein zukünftiges Zeitintervall erstellt, basierend auf Wetter-Prognosedaten (31, 32) für das Zeitintervall;
f) vorgeschlagene Schaltzeiten (34) basierend auf der Produktionsüberschussprognose definiert werden;
g) die Verarbeitungseinrichtung (10) eine erwartete Kostenersparnis für einen Strombezug des lokalen Stromverbrauchers (4.1..4.4) bestimmt, basierend auf den Wetter-Prognosedaten (31, 32) für das Zeitintervall, den vorgeschlagenen Schaltzeiten (34), historischen Wetterdaten (51) und/oder historischen Wetter-Prognosedaten (55), historischen Produktionsdaten (52) und Tarifdaten eines Stromlieferanten; und
h) die Verarbeitungseinrichtung die vorgeschlagenen Schaltzeiten (34) an die Steuerstelle (9) übermittelt, falls die erwartete Kostenersparnis ein Validierungskriterium erfüllt.

11. Anlage nach Anspruch 10, **dadurch gekennzeichnet, dass** die Steuerstelle (9) mehrere, verschiedenen Photovoltaik-Produktionsanlagen (6.1...6.4) zugeordnete lokale Stromverbraucher (4.1...4.4) gruppenweise steuert.

12. Anlage nach Anspruch 11, **dadurch gekennzeichnet, dass** das Validierungskriterium eine erwartete Kostenersparnis bei einem p-Quantil einer Verteilung der erwarteten Kostenersparnisse bei den Photovoltaik-Produktionsanlagen (6.1...6.4) einer jeweiligen Gruppe ist.

## Claims

1. Method for controlling a local electricity consumer (4.1 ... 4.4), wherein the local electricity consumer (4.1 ... 4.4) can procure electricity both from an electricity grid (2) and from a local photovoltaic production installation (6.1 ... 6.4), comprising the following steps:
a) creating a production surplus forecast with respect to the local photovoltaic production installation (6.1 ... 6.4) for a future time interval, on the basis of weather forecast data (31, 32) for the time interval;
b) defining proposed switching times for the local electricity consumer (4.1 ... 4.4) on the basis of the production surplus forecast;
**characterized by** the following steps:
c) determining an expected cost saving for an electricity procurement of the local electricity consumer (4.1 ... 4.4), on the basis of
- the weather forecast data (31, 32) for the time interval,
- the proposed switching times (34),
- historical weather data (51) and/or historical weather forecast data (55),
- historical production data (52) and
- tariff data of an electricity supplier; and
d) controlling an electricity procurement of the local electricity consumer (4.1 ... 4.4) on the basis of the proposed switching times if the expected cost saving satisfies a validation criterion.

2. Method according to Claim 1, **characterized in that** a machine learning model is used for determining the expected cost saving.

3. Method according to Claim 2, **characterized in that** the machine learning model is trained by a procedure in which switching times for a plurality of time intervals are defined on the basis of historical weather forecast data (55) and a cost saving that results on account of said switching times is determined on the basis of the historical production data (52) measured in the time intervals.

4. Method according to Claim 3, **characterized in that** cost savings of a plurality of local electricity consumers and a plurality of local photovoltaic production installations are taken into account for training the machine learning model.

5. Method according to Claim 3 or 4, **characterized in that** the validation criterion is an expected cost saving in a p-quantile of a distribution of the expected cost savings.

6. Method according to Claim 5, **characterized in that** the proposed switching times (34) are validated if the expected cost saving in the p-quantile is positive, wherein p ≤ 30%, preferably p ≤ 20%.

7. Method according to any of Claims 3 to 6, **characterized in that** historical consumption profiles (53) with respect to the local photovoltaic production installations (6.1 ... 6.4) are taken into account for determining the resulting cost savings.

8. Method according to any of Claims 3 to 7, **characterized in that** infeeds of the local photovoltaic production installations (6.1 ... 6.4) into the electricity grid (2) are taken into account for determining the resulting cost savings.

9. Method according to any of Claims 1 to 8, **characterized in that** time windows with a maximum expected production surplus are identified for defining the proposed switching times (34), said time windows having a predefined minimum duration.

10. Installation for carrying out the method according to any of Claims 1 to 9, comprising:
a) a plurality of local photovoltaic production installations (6.1 ... 6.4);
b) a plurality of local electricity consumers (4.1 ... 4.4) which are respectively assigned to one of the local photovoltaic production installations (6.1 ... 6.4) and which are connected to the respective local photovoltaic production installation (6.1 ... 6.4) and to an electricity grid (2) for electricity procurement;
c) a central control station (9), which can control an electricity procurement of the local electricity consumers (4.1 ... 4.4);
d) a processing device (10) for defining and communicating switching times for the local electricity consumers (4.1 ... 4.4) to the central control station (9);
wherein
e) the processing device (10) creates a production surplus forecast with respect to the local photovoltaic production installation (6.1 ... 6.4) for a future time interval, on the basis of weather forecast data (31, 32) for the time interval;
f) proposed switching times (34) are defined on the basis of the production surplus forecast;
g) the processing device (10) determines an expected cost saving for an electricity procurement of the local electricity consumer (4.1 ... 4.4), on the basis of the weather forecast data (31, 32) for the time interval, the proposed switching times (34), historical weather data (51) and/or historical weather forecast data (55), historical production data (52) and tariff data of an electricity supplier; and
h) the processing device communicates the proposed switching times (34) to the control station (9) if the expected cost saving satisfies a validation criterion.

11. Installation according to Claim 10, **characterized in that** the control station (9) controls in a groupwise manner a plurality of local electricity consumers (4.1 ... 4.4) assigned to different photovoltaic production installations (6.1 ... 6.4).

12. Installation according to Claim 11, **characterized in that** the validation criterion is an expected cost saving in a p-quantile of a distribution of the expected cost savings in the case of the photovoltaic production installations (6.1 ... 6.4) of a respective group.

## Revendications

1. Procédé de commande d'un consommateur électrique (4.1, ..., 4.4) local, le consommateur électrique (4.1, ..., 4.4) local pouvant être approvisionné en électricité aussi bien depuis un réseau électrique (2) que depuis un équipement de production photovoltaïque (6.1, ..., 6.4) local, comprenant les étapes suivantes :
a) établissement d'une prévision d'excédent de production en référence à l'équipement de production photovoltaïque (6.1, ..., 6.4) local pour un futur intervalle de temps en se basant sur des données de prévision météorologique (31, 32) pour l'intervalle de temps ;
b) définition de moments de commutation proposés pour le consommateur électrique (4.1, ..., 4.4) local en se basant sur la prévision d'excédent de production ; **caractérisé par** les étapes suivantes :
c) détermination d'économies attendues pour un approvisionnement en électricité du consommateur électrique (4.1, ..., 4.4) local en se basant sur
- les données de prévision météorologique (31, 32) pour l'intervalle de temps ;
- les moments de commutation proposés (34) ;
- des données météorologiques historiques (51) et/ou des données de prévision météorologique historiques (55),
- des données de production historiques (52) et
- des données tarifaires d'un fournisseur d'électricité ; et
d) commande d'un approvisionnement en électricité du consommateur électrique (4.1, ..., 4.4) local au moyen des moments de commutation proposés dans le cas où les économies attendues remplissent un critère de validation.

2. Procédé selon la revendication 1, **caractérisé en ce qu'**un modèle d'apprentissage automatique est utilisé pour la détermination des économies attendues.

3. Procédé selon la revendication 2, **caractérisé en ce que** le modèle d'apprentissage automatique est entraîné **en ce que** des moments de commutation pour plusieurs intervalles de temps sont définis en se basant sur des données de prévision météorologique historiques (55) et des économies résultant de ces moments de commutation sont déterminées en se basant sur les données de production historiques (52) mesurées dans les intervalles de temps.

4. Procédé selon la revendication 3, **caractérisé en ce que** les économies de plusieurs consommateurs électriques locaux et de plusieurs équipements de production photovoltaïque locaux sont prises en compte pour l'entraînement du modèle d'apprentissage automatique.

5. Procédé selon la revendication 3 ou 4, **caractérisé en ce que** le critère de validation est une économie attendue avec un quantile p d'une distribution des économies attendues.

6. Procédé selon la revendication 5, **caractérisé en ce que** les moments de commutation proposés (34) sont validés lorsque les économies attendues avec le quantile p sont positives, avec p ≤ 30 %, de préférence p ≤ 20 %.

7. Procédé selon l'une des revendications 3 à 6, **caractérisé en ce que** des profils de consommation historiques (53) en référence aux équipements de production photovoltaïque (6.1, ..., 6.4) locaux sont pris en compte en vue de la détermination des économies résultantes.

8. Procédé selon l'une des revendications 3 à 7, **caractérisé en ce que** les injections des équipements de production photovoltaïque (6.1, ..., 6.4) locaux dans le réseau électrique (2) sont prises en compte en vue de la détermination des économies résultantes.

9. Procédé selon l'une des revendications 1 à 8, **caractérisé en ce que** des fenêtres de temps avec un excédent de production maximal attendu, lesquelles présentent une durée minimale prédéfinie, sont identifiées en vue de la définition des moments de commutation proposés (34).

10. Équipement pour mettre en oeuvre le procédé selon l'une des revendications 1 à 9, comprenant :
a) plusieurs équipements de production photovoltaïque (6.1, ..., 6.4) locaux ;
b) plusieurs consommateurs électriques (4.1, ..., 4.4) locaux, respectivement associés à l'un des équipements de production photovoltaïque (6.1, ..., 6.4) locaux, lesquels sont raccordés à l'équipement de production photovoltaïque (6.1, ..., 6.4) local correspondant et à un réseau électrique (2) en vue de l'approvisionnement en électricité ;
c) un poste de commande (9) central qui peut commander un approvisionnement en électricité des consommateurs électriques (4.1, ..., 4.4) locaux ;
d) un dispositif de traitement (10) servant à la définition et à la communication de moments de commutation pour les consommateurs électriques (4.1, ..., 4.4) locaux au poste de commande (9) central ;
e) le dispositif de traitement (10) établissant une prévision d'excédent de production en référence à l'équipement de production photovoltaïque (6.1, ..., 6.4) local pour un futur intervalle de temps en se basant sur des données de prévision météorologique (31, 32) pour l'intervalle de temps ;
f) des moments de commutation (34) proposés étant définis en se basant sur la prévision d'excédent de production ;
g) le dispositif de traitement (10) déterminant les économies attendues pour un approvisionnement en électricité du consommateur électrique (4.1, ..., 4.4) local en se basant sur les données de prévision météorologique (31, 32) pour l'intervalle de temps, les moments de commutation proposés (34), des données météorologiques historiques (51) et/ou des données de prévision météorologique historiques (55), des données de production historiques (52) et des données tarifaires d'un fournisseur d'électricité ; et
h) le dispositif de traitement communiquant les moments de commutation proposés (34) au poste de commande (9) dans le cas où les économies attendues remplissent un critère de validation.

11. Équipement selon la revendication 10, **caractérisé en ce que** le poste de commande (9) commande par groupes plusieurs consommateurs électriques (4.1, ..., 4.4) locaux associés à différents équipements de production photovoltaïque (6.1, ..., 6.4).

12. Équipement selon la revendication 11, **caractérisé en ce que** le critère de validation est une économie attendue avec un quantile p d'une distribution des économies attendues avec les équipements de production photovoltaïque (6.1, ..., 6.4) d'un groupe correspondant.
